# EUROPEAN PATENT SPECIFICATION

(11) **EP 0 818 698 B1**
(45) Date of publication and mention of the grant of the patent: **12.03.2003**
(21) Application number: 97304436.5
(22) Date of filing: 24.06.1997
(51) Int. Cl.: G02B 9/08, G03B 21/00

(54) **Optical projector**
Optischer Projector
Projecteur optique

(30) Priority: 28.06.1996 JP 16985296
(43) Date of publication of application: 14.01.1998
(73) Proprietor: Tomy Company, Ltd., Tokyo (JP)
(72) Inventor: Miyazaki, Sadayasu, c/o Tomy Company, Ltd., Katsushika-ku, Tokyo (JP)
(74) Representative: Dealtry, Brian

(56) References cited:
- EP-A- 0 299 475
- US-A- 3 492 069
- US-A- 4 109 995
- US-A- 5 067 803
- HIRSCHBERG J G: "LONG RANGE MICROSCOPE CONDENSING SYSTEM" APPLIED OPTICS, vol. 29, no. 10, page 1409/1410 XP000104568
- PATENT ABSTRACTS OF JAPAN vol. 018, no. 402 (P-1777), 27 July 1994 & JP 06 118301 A (SEKINOSU KK), 28 April 1994,

## Description

### BACKGROUND OF THE INVENTION

### Field of the Invention

The present invention relates to an optical device, for example, to an optical device for projecting an image held on a film on a ceiling or a wall.

### Description of Related Art

An optical device such as a projector toy or the like, in which a light is irradiated to an image held on a film from the rear side thereof to project the image on a ceiling or a wall, has been known up to this time. Generally, in such a projector toy, the image projected on the ceiling or the like is successively changed by rotating a film with a plurality of images.

However, there was a problem that such a projector toy was little interesting because a static image was simply changed not to give a projected image full of variety, although the projected image was changed when a film having a plurality of images was rotated.

### SUMMARY OF THE INVENTION

The present invention has been made in view of the above-mentioned problems, it is, therefore, an object of the present invention to provide an improved projector toy which can give a pleasure of change of the projected image full of variety.

A solution to the above - mentioned problem is defined in claim 1.

That is, in accordance with one aspect of the present invention, the optical device comprises; a lens L1 comprising a meniscus lens having a positive power, a lens L2 comprising a lens having a positive power, a stop arranged between the lenses L1 and L2, and an illuminating means arranged behind the lens L2, wherein the lens L1 is arranged so that a concave surface R2 thereof faces a side of the stop and the lens L2 is arranged so that a surface R3 having a smaller curvature thereof faces the other side of the stop, and the lenses L1 and L2 have powers L1P and L2P and curvatures that satisfy the following conditions:

| | |
|---|---|
| Power ratio | 0.5<(L1P/L2P)<1.0 |
| Curvature of the lens L1 | 0.6>(R1C/R2C)>0,3 |
| Curvature of the lens L2 | \|R3C/R4C\|>3 |

wherein L1P and L2P are powers of the lenses L1 and L2, respectively, R2C is a radius of curvature of the concave surface R2 of the lens L1, R1C is a radius of curvature of the other surface R1 of the lens L1, R3C is a radius of curvature of the surface R3 of the lens L2, and R4C is a radius of curvature of the other surface R4 of the lens L2.

The reason of the lenses L1 and L2 provided with the above-described shapes is as follows.

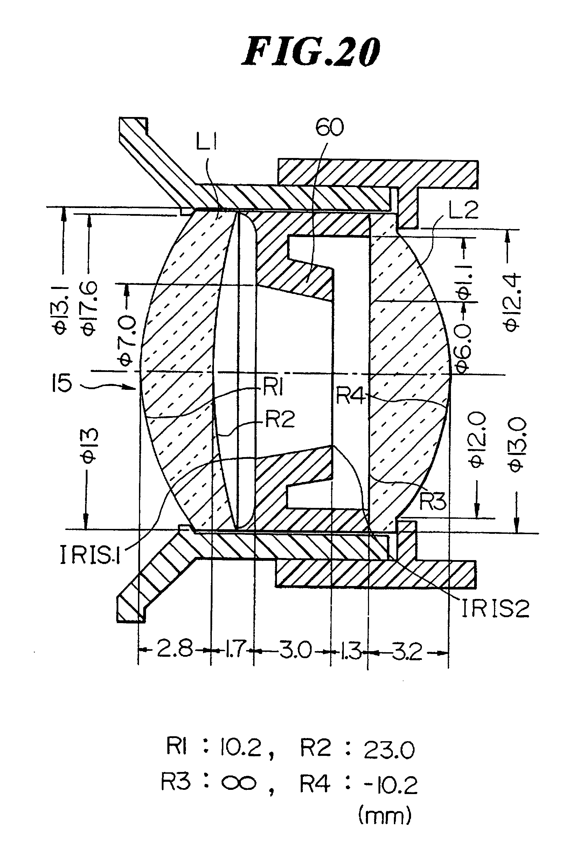

That is, in FIG. 20, when the ratio of the powers (L1P/L2P) is not more than 0.5, the spherical aberration of the projection lens become worse because the power and the curvature of the lens L1 are larger than those of the lens L2. On the other hand, when the ratio of the powers is not less than 1.0, it becomes difficult to compensate an astigmatism or a distortion of the projection lens because the power of the lens L1 is relatively larger than that of the lens L2, so that the curvature of the concave (R2 surface) which is required for compensation of the astigmatism or the distortion is smaller.

When (R1C/R2C) of the lens L1 is not more than 0.3, it becomes difficult to make, in particular, the meridional plane flat, because the astigmatism is larger. On the other hand, when (R1C/R2C) of the lens L1 is not less than 0.6, the spherical aberration of the projection lens becomes worse because the power of the lens L1 becomes very small and therefore that of the lens L2 is required to be very large, together with a large degree of meniscus of the lens L1, and it becomes difficult to compensate the distortion of the projection lens because the distortion has a large negative number.

When |R3C/R4C| of the lens L2 is not more than 3 and the degree of convex of the R3 surface is increased, the positive distortion thereof is increased. When the degree of concave of the R3 surface is increased, the spherical aberration of the projection lens becomes worse because the lens L2 comes to constitute a symmetrical lens with the lens L1.

According to such an optical device, it is possible to realize a molded plastic projection lens having a large aperture ratio of F1.5 to F2.8, an angle of view of 70° to 90° (ultrawide angle) and a distortion within the range of ±3%. As a result, it is possible to produce an ultrawide angle lens at a low cost. In the existing circumstances, the angle of view of an optical device such as a projector toy or the like, is generally in a narrow range of 20° to 30° because of its poor optical performance. On the contrary, the optical device having an ultrawide angle according to the invention is very available, in particular, for projecting a large image on a whole surface of a ceiling, wall or the like.

Although the optical device comprising two lenses of positive power cannot compensate a chromatic aberration because of having no lens of negative power, the chromatic aberration can be neglected because the device has an ultrawide angle and a small focal length. Although only two lenses cannot make the image surface a perfect flat plane because the Petzval's value is not zero, it is possible to obtain a flat image having little portion which looks like a flowing image between the meridional plane and the sagittal plane (which is negative) thereof, by making the concave surface adequate which is the R2 surface of the lens L2 and by increasing the spacing between these lenses L1 and L2, in order to make the meridional plane positive. However, because the difference between these planes is large, it is required to cut the peripheral part of the luminous flux through the stop. Although the quantity of light in the periphery is decreased to some extent by the cut of the peripheral light, it is possible to improve the formed image.

Such an optical device is suitable for projecting an image which is micro-printed on a transparent film, an image of a small sized positive film, or the like, on a screen. According to the optical device, it is possible to project a super wide image on a huge screen such as a wall, a ceiling or the like even if a poor light source is used because of its large aperture and ultrawide angle.

Preferably, the lenses L1 and L2 are made of a homogeneous plastic.

According to the optical device having such lenses, it is possible to make a mold to form such two types of lenses simultaneously by bringing diameters, thicknesses, and volumes of the lenses L1 and L2 near to each other. As a result, it is possible to produce the lenses L1 and L2 at a low cost. Because the optical device has a good optical performance without use of aspherical lenses, it is also possible to obtain a metal mold for the lenses at a low cost.

Preferably, the stop comprises a piece of stop member having a large thickness or two pieces of stop members which are largely apart from each other.

According to the optical device having such a structure, it is possible to largely improve the astigmatism thereof.

The optical device preferably further comprises: a lamp arranged in the vicinity of one of focal points of a virtual ellipsoid; a reflector for forming an image having a ring-shape, of a light emitted from the lamp, in the vicinity of a rear principal point of a projection lens comprising the lenses L1 and L2, the reflector provided approximately on a half of the virtual ellipsoid and having a reflecting surface in an inner side of the virtual ellipsoid; a prism plate having a plurality of ring-shaped prisms which are concentrically formed thereon, for forming an image of the light through the reflector at approximately the rear principal point of the projection lens; and an image member having an image arranged between the prism plate and the projection lens.

According to the optical device having such a structure, it is possible to appreciably reduce the shadow of the lamp bulb in the projection system. Because formation of a plurality of concentric ring-shaped prisms on a plate enables uniformalization of the thickness of the prism means, it is possible to reduce the time for molding it to decrease the production cost therefor, and to suppress a sink mark caused by molding to improve the quality thereof.

Preferably, the image member comprises a plurality of disc-shaped films with images, which are rotatably provided on an axis, and a cassette frame for containing the disc-shaped films therein and having a window for projecting images of the films therethrough. The optical device may further comprise an upper roller for giving a rotation to an upper one of the films in the cassette frame, a lower roller for giving a rotation to a lower one of the films, and a sliding member for engaging the upper and lower rollers with the films or releasing an engagement thereof. The upper and lower rollers are preferably driven independently of each other.

According to the optical device having such a structure, because a plurality of disc-shaped films with images can be rotated in desired directions or at desired rotational speeds independently of each other, it is possible to realize a projection device which can provide varied projected images. Further, it is possible to easily exchange the cassette for another one including other a plurality of disc-like films with different images, and thereby to give a pleasure of change of the projected images full of variety well.

Preferably, the sliding member has upper and lower bevels to make the top narrower, for keeping the upper and lower rollers apart from each other while the sliding member engages with axes of the upper and lower rollers, to release the engagement between the rollers and the films. The optical device may further comprise a swingable lever engaging with the sliding member, for sliding the sliding member by an engagement with the cassette frame so that the sliding member engages with axes of the upper and lower rollers to release the engagement between the rollers and the films before the cassette frame reaches a predetermined position between the prism plate and the projection lens, and an engagement of the sliding member with the axes of the rollers is released when the cassette frame reaches the predetermined position.

Accordingly, it is possible to surely and appropriately perform engagement of the plurality of films and the upper and lower rollers or release thereof when the cassette frame containing the films is put into or out of a cassette insertion member.

Preferably, each ring-shaped prism of the prism plate has a particular prism angle to optimize a course of a beam of light passing therethrough, and a step angle of each ring-shaped prism is set so that the step is approximately parallel to the beam of light passing therethrough to minimize the ring-shaped shadow caused by the step.

### BRIEF DESCRIPTION OF THE DRAWINGS

The present invention will become more fully understood from the detailed description given hereinbelow and the accompanying drawings which are given by way of illustration only, and thus are not intended as a definition of the limits of the present invention, and wherein;
FIG. 1 is a perspective view for showing a structure of the optical device according to an embodiment of the invention;
FIG. 2 is an exploded perspective view of the lower part of the structure of the optical device shown in FIG. 1;
FIG. 3 is an exploded perspective view of the upper part of the structure of the optical device;
FIG. 4 is a circuit diagram of the optical device;
FIG. 5 is a vertically sectional view of the illuminating means and the projection means of the optical device;
FIG. 6 is an exploded perspective view of the focusing means and the periphery thereof, of the optical device;
FIG. 7 is an exploded perspective view of the film driving mechanism of the optical device;
FIG. 8 is a horizontally sectional view of the film driving mechanism of the optical device;
FIG. 9 is a view for showing the engagement relationship between gears in a part of the film driving mechanism of the optical device;
FIG. 10 is a vertically sectional view for showing the film driving mechanism of the optical device;
FIG. 11 is a vertically sectional view for showing an engagement state of the film driving mechanism and the films in the cassette, of the optical device;
FIG. 12 is an exploded perspective view of the cassette containing two disc-shaped films;
FIG. 13 is a perspective view for showing the cassette and the roller moving mechanism in the optical device;
FIG. 14 is a perspective view for showing the cassette and the roller moving mechanism in a state of the cassette which is entering the cassette insertion opening, in the optical device;
FIG. 15 is a perspective view for showing the cassette and the roller moving mechanism in a state of the cassette which is further advancing in the cassette insertion opening, in the optical device;
FIG. 16 is a perspective view for showing the cassette and the roller moving mechanism in a state of the cassette which reaches a predetermined position in the cassette insertion opening, in the optical device;
FIG. 17 is a perspective view for showing the cassette and the roller moving mechanism in a state of the reset button which is pressed down, in the optical device;
FIG. 18 is an explanation view for showing the relationship between the illuminating means, the projection means and the blackout, in the optical device of the embodiment;
FIG. 19A is a vertically sectional fragmentary view of the concentric prism plate in the optical device, and FIG. 19B is a half of plan view of the concentric prism plate in the optical device;
FIG. 20 is a vertically sectional view for showing the structure of the projection lens of the Example 1;
FIG. 21 is a view for showing aberrations of the projection lens of the Example 1;
FIG. 22 is a view for showing aberrations of the projection lens of the Example 2; and
FIG. 23 is an explanation view for showing the relationship between the illuminating means and the blackout in a conventional optical device.

### PREFERRED EMBODIMENT OF THE INVENTION

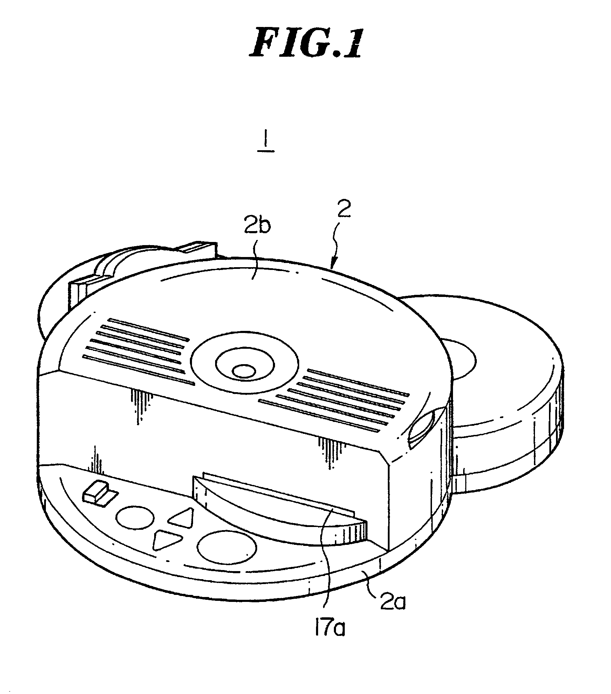

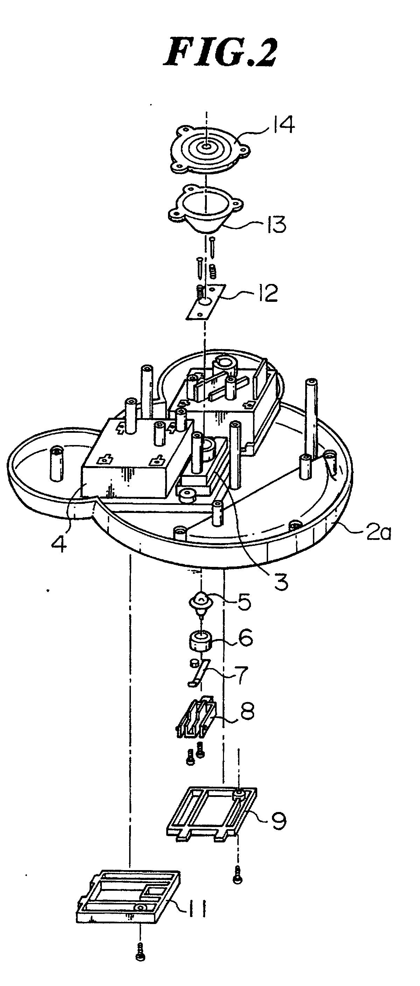

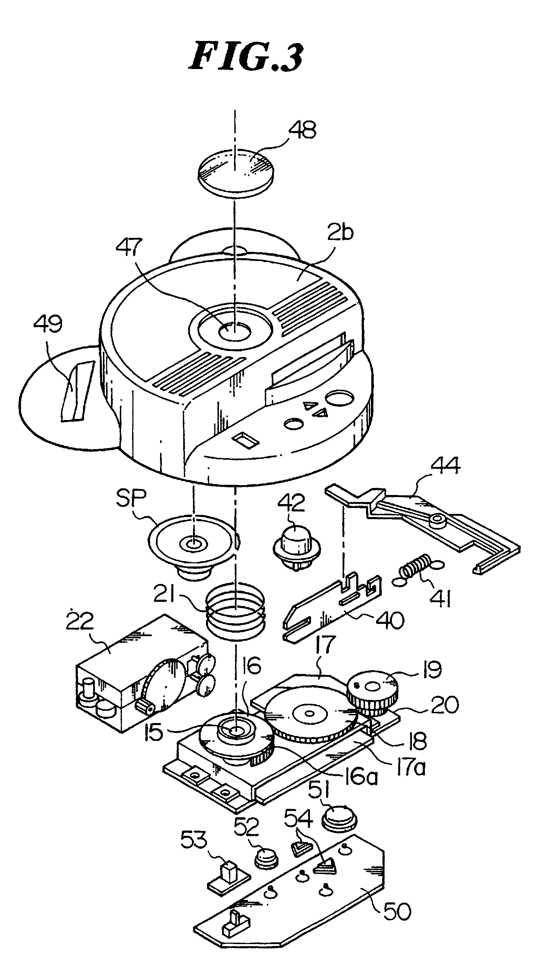

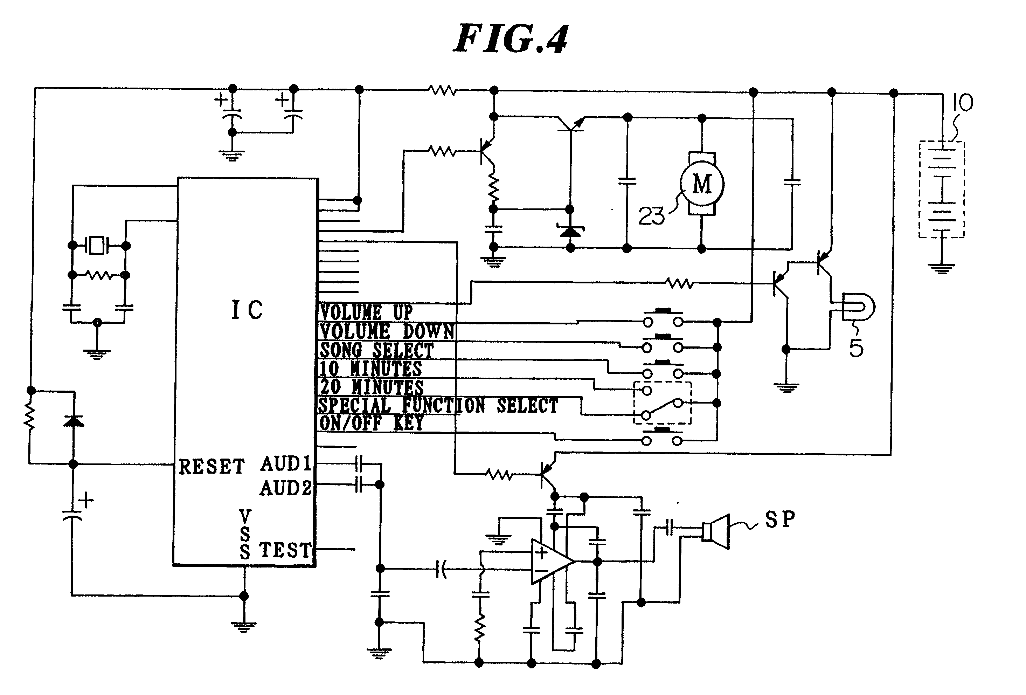

An optical device according to an embodiment of the invention is shown in FIG. 1. In the optical device 1, a body 2 comprises a lower frame 2a and an upper frame 2b. FIGS. 2 and 3 show the lower part and the upper part of the structure of the optical device, respectively. On the lower frame 2a, a lamp box 3 and a battery box 4 are provided, as shown in FIG. 2. On the lamp box 3, a lamp 5 is provided. The lamp 5 is fixed in the lamp box 3 by a lamp supporting member 8 in state where the base portion of the lamp is put in a ring-shaped lamp adapter 6 to bring an end of the lamp 5 into contact with a plate contact 7. A bottom opening of the lamp box 3 is covered by a cover 9. On the other hand, in the battery box 4, a plurality of batteries 10 shown in FIG. 4 are set. A bottom opening of the battery box 4 is covered by a battery cover 11.

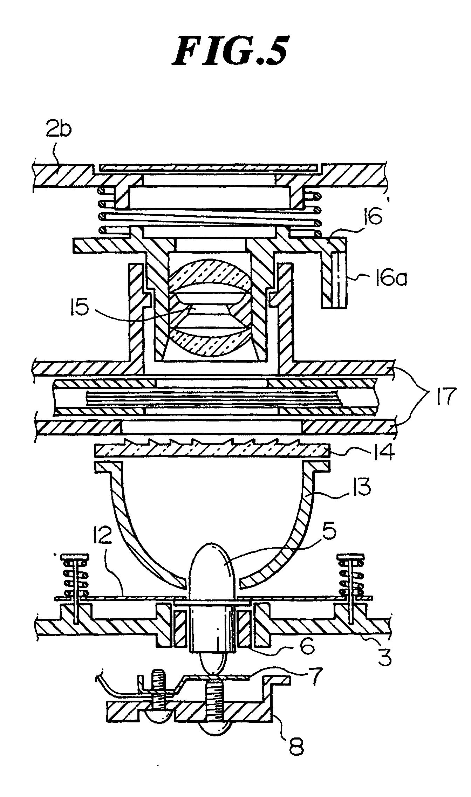

FIG. 5 shows the illuminating means and the projection means of the optical device. In the illuminating means, the head of the lamp 5 is projected above the lamp box 3, as shown in this figure, and the other end of the lamp 5 is in contact with a plate contact 12. The head of the lamp 5 is positioned at approximately the focal point of a reflector 13 which has a shape of approximately a half of an ellipsoid and is provided on the lamp box 3. On the upper end of the reflector 13, a concentric prism plate 14 having a plurality of ring-shaped prisms which are concentrically formed thereon, is provided. Above the concentric prism plate 14, a projection lens 15 is provided, as shown in FIGS. 3 and 5. The projection lens 15 is supported by a lens frame 16 which is attached to a supporting plate 17. The structure of the reflector 13, the concentric prism 14 and the projection lens 15 will be explained later.

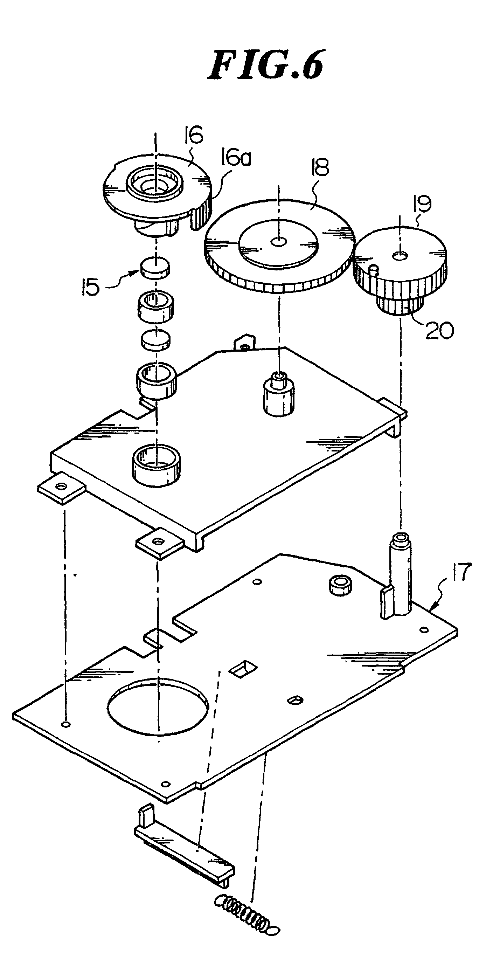

FIG. 6 shows a focusing means and the periphery thereof, of the optical device 1. In the focusing means, the lens frame 16 has a gear portion 16a which is formed in a portion of the periphery thereof, as shown in FIGS. 3 and 6. The gear portion 16a stays in mesh with an intermediate gear 18 which is supported on the supporting plate 17. The intermediate gear 18 stays in mesh with a driving gear 20 which is attached to an axis of a focus adjustment dial 19. A portion of the focus adjustment dial 19 laterally projects from the side of the upper frame 2b in order to rotatably operate it by a finger. When rotatably operating the focus adjustment dial 19, the lens frame 16 is rotated to move itself up or down by a spiral motion for an upward or downward movement, so that the focus of the projection lens 15 can be adjusted. The reference numeral 21 in FIG. 3 denotes a pressure spring for pressing the lens frame 16 down.

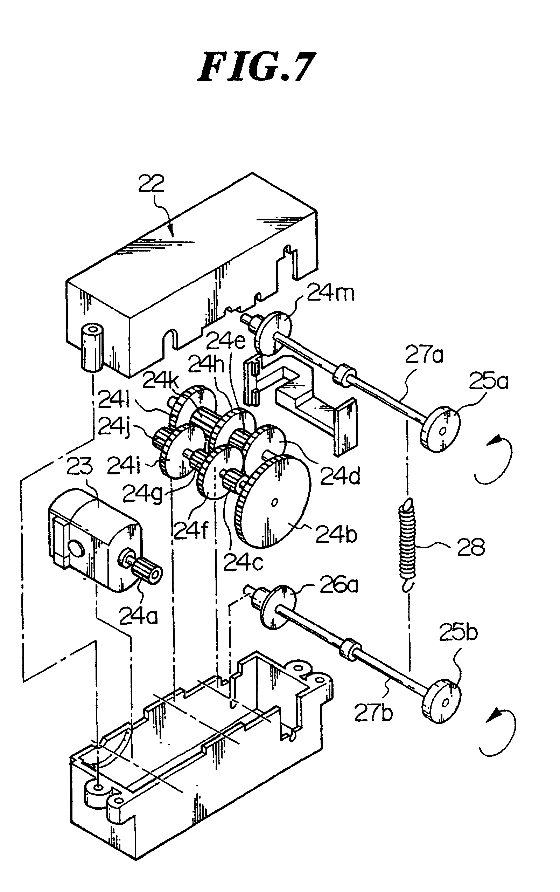

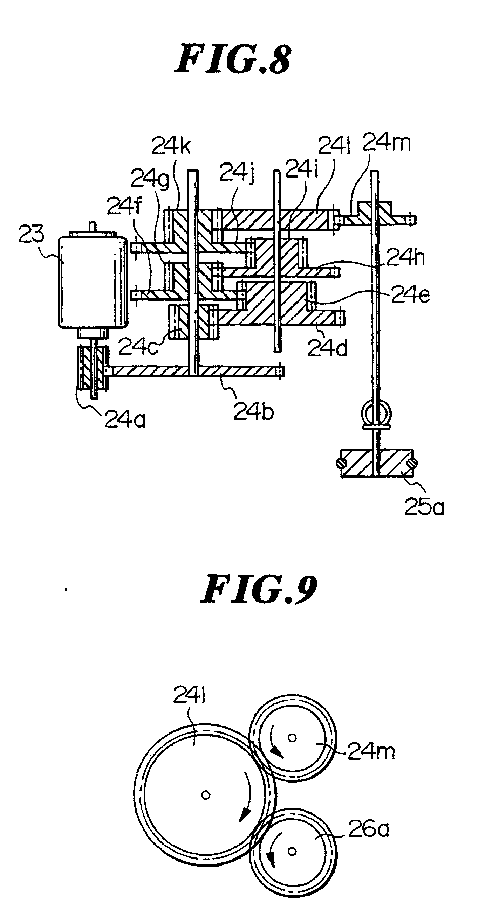

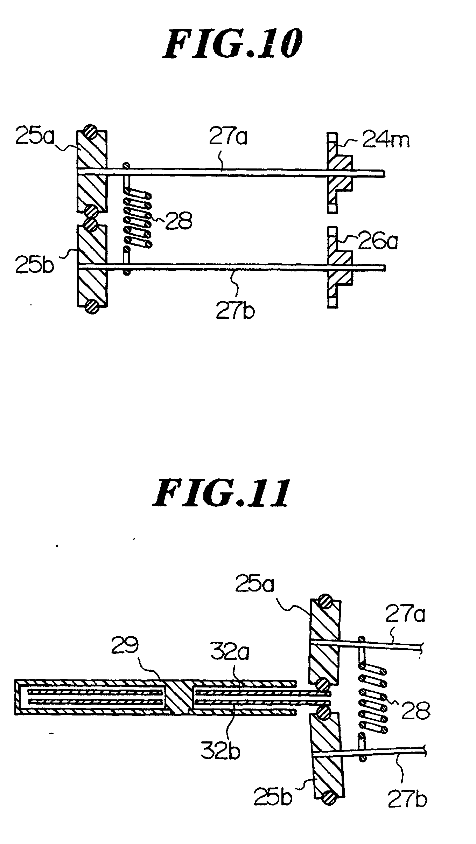

A film driving frame 22 is attached to the upper surface of the battery box 4. In the film driving frame 22, a motor 23 is provided, as shown in FIG. 7. The motive power of the motor 23 is transmitted to an upper roller 25a through a plurality of gears 24a to 24m in this order, as shown in FIG. 8. The motive power of the motor 23 is transmitted to a lower roller 25b through a plurality of gears 24a to 24l and 26a, as shown in FIG. 9. The lower roller 25b is rotated in the same direction as that of the upper roller 25a. Between an axis 27a of the upper roller 25a and an axis 27b of the lower roller 25b, a pulling spring 28 is spanned, as shown in FIG. 10.

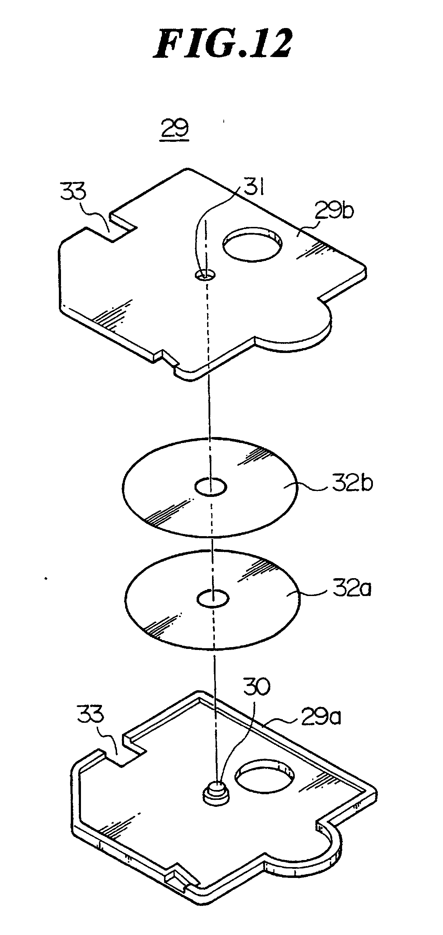

In the supporting plate 17, a cassette insertion opening 17a is formed, as shown FIG. 3. The cassette insertion opening 17a is opened in the front side of the upper frame 2b so that a cassette 29 can be installed and removed through the opening 17a. Cassette frame comprises a lower frame 29a and an upper frame 29b, as shown in FIG. 12. The lower frame 29a and the upper frame 29b are united to each other by tightly fitting a boss 30 provided on the lower frame 29a at the center thereof into a hole 31 formed in the upper frame 29b. In the inside of the united lower and upper frames 29a and 29b, two disc-shaped films 32a and 32b with images are provided. Each of the films 32a and 32b may be made of a transparent film with microprinted images, a small-sized positive film with images, or the like, although it is not limited to that.

In the back side of the cassette frames, recess portions 33 are formed so that a portion of the films 32a and 32b are exposed through the recess portions 33. While the cassette 29 is inserted in the cassette insertion opening 17a, the upper surface of the films 32a and the lower surface of the films 32b are in contact with the upper roller 25a and the lower roller 25b, respectively, as shown in FIG. 11.

Each of the upper and lower cassette frames has a window at an eccentric position so that images of the films 32a and 32b which correspond to the window can be projected.

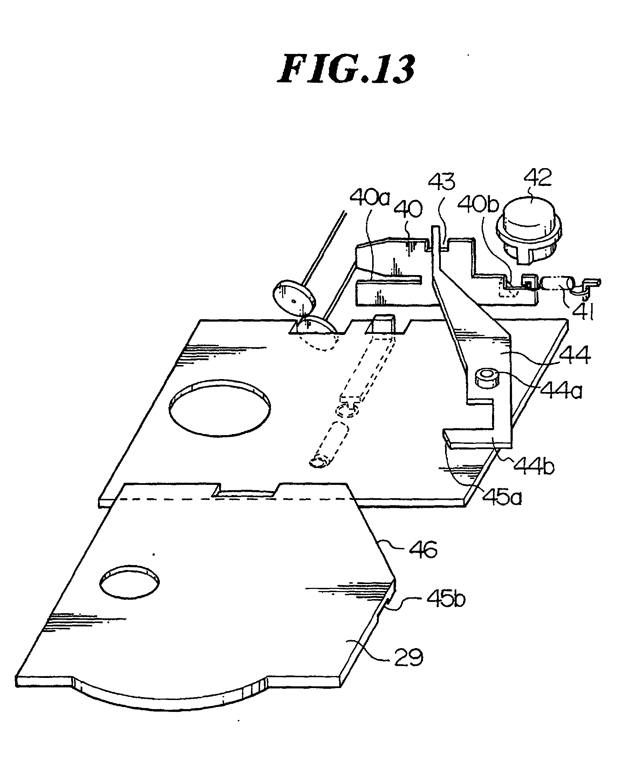

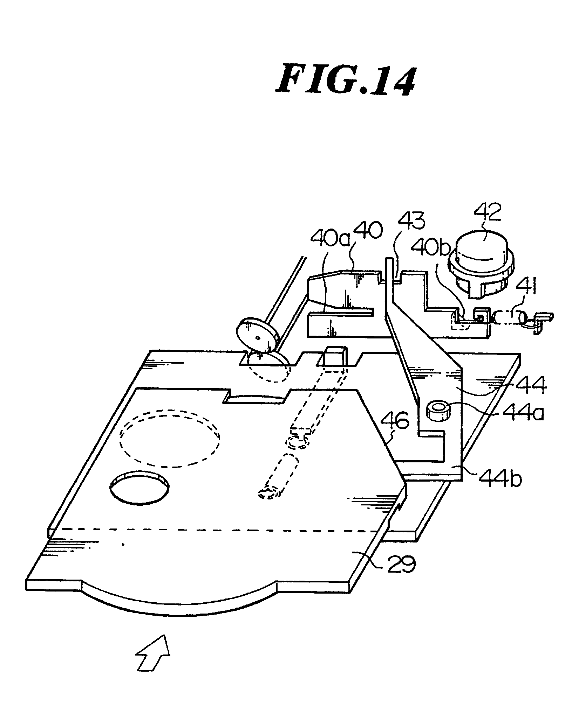

FIGS. 13-17 show the cassette having two films therein and the roller moving mechanism in the optical device. FIGS. 14, 15, 16 and 17 show a state where the cassette is entering the cassette insertion opening, a state where the cassette is further advancing in the cassette insertion opening, a state where the cassette reaches a predetermined position in the cassette insertion opening, and a state where the reset button is pressed down, respectively. In the back side of the supporting plate 17, a slider 40 which can move in a lateral direction is provided. A recess 40a is formed in a top end portion (the left end portion in the Figures) of the slider 40. The slider 40 has a structure so that when the slider 40 is moved to the left, the axis 27b of the lower roller 25b is put into the recess 40a and thereby the interference between the slider 40 and the axis 27b can be prevented.

The top end of the upper portion of the slider 40 above the recess 40a has upper and lower bevels to make the top narrower. When the slider 40 is moved to the left side, the portion having the bevels comes in between the axis 27a of the upper roller 25a and the axis 27b of the lower roller 25b to keep the upper roller 25a and the lower roller 25b apart from each other.

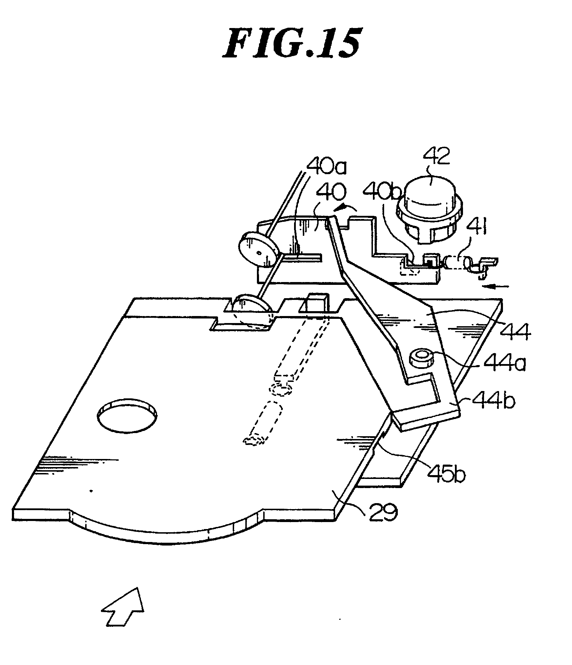

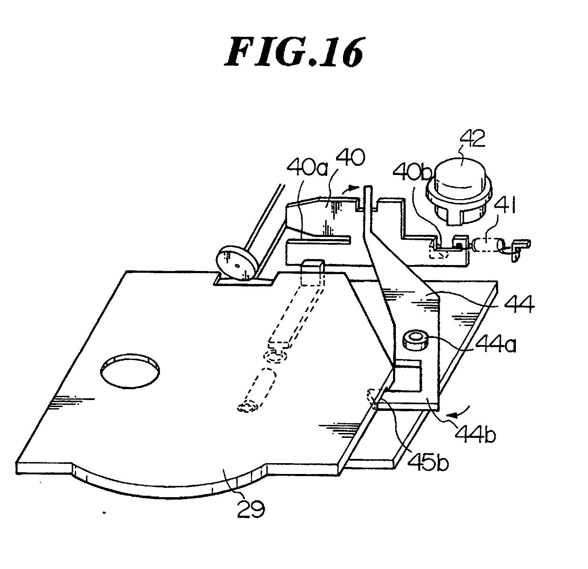

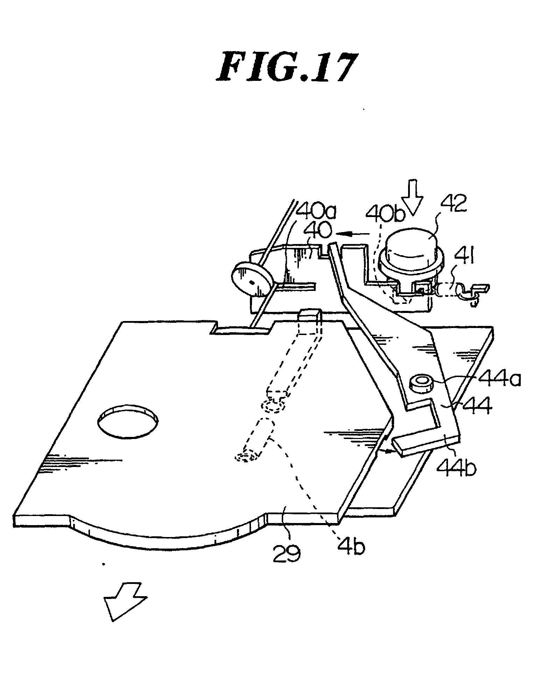

The slider 40 having such a structure is given a biasing force in a right direction by a spring 41. The slider 40 has a slope 40b to enable movement of the slider 40 to the left by pushing a reset button 42 down against the slope 40b. The slider 40 has a recess 43 which is formed in the upper side thereof. An end of a lever 44 which is swingable around an axis 44a is engaged with the recess 43. The lever 44 is swung around the axis 44a by right and left movements of the slider 40. In the other end of the lever 44, a hooked portion 44b which has a slope 45a at the top end thereof is formed. The top end of the hooked portion 44b is positioned in the movable range of the cassette 29 under a normal condition (i.e., a state of the reset button 42 being not pushed down). When the cassette 29 is inserted in the cassette insertion opening 17a of the supporting plate 17, the top end of the hooked portion 44b is brought into contact with an oblique portion 46 of the cassette 29, as shown in FIG. 14. Consequently, the lever 44 is rotated around the axis 44a in a counterclockwise direction against the biasing force of the spring 41. After a side parallel to the insertion direction, of the cassette 29 reaches to the top end of the hooked portion 44b, as shown in FIG. 15, the top end of the hooked portion 44b is in contact with the side of the cassette 29 continuously. As a result, the rotation of the lever 44 in the counterclockwise direction is stopped. When the cassette 29 is further inserted up to the predetermined position in the cassette insertion opening 17a to make the top end of the hooked portion 44b reach to a recess 45b which is formed in the side of the cassette 29, the top end of the hooked portion 44b comes to fit into the recess 45b by the biasing force of the spring 41, as shown in FIG. 16. Release of engagement of the top end of the hooked portion 44b with the recess 45b is carried out by pushing the reset button 42 down. That is, when the reset button 42 is pushed down against the slope 40b, the slider 40 is moved to the left side by the slope 40b pushed. Consequently, the lever 44 is rotated around the axis 44a in a counterclockwise direction to release the engagement of the top end of the hooked portion 44b with the recess 45b, as shown in FIG. 17. When the engagement is released, the cassette 29 is pushed out forward by the pulling function of a spring 4b which has been charged by the insertion of the cassette 29.

Thus, it is possible to surely and appropriately perform engagement of the plurality of films with images and the upper and lower rollers or release thereof when the cassette frame containing the films is put into or out of a cassette insertion member.

In the upper frame 2b, a through hole 47 is formed at a position corresponding to the projection lens 15, as shown in FIG. 3. This hole 47 is covered with a disc-shaped transparent cover 48. The upper frame 2b has a recess portion 49 for containing cassettes. The recess portion 49 permits containing of a plurality of cassettes 29.

The optical device 1 has various types of switches. Those various types of switches will be explained with reference of FIGS. 3 and 4. FIG. 4 is a circuit diagram of the optical device.

### 1) Power supply switch

An IC attached to the rear side of a board 50 in the optical device 1 is always in a stand-by condition. When a power switch 51 is turned on, the lamp 5 lights up, the motor 23 is driven, and a piece of music is played through a speaker SP.

When a power switch 51 is turned off, the motor 23 is stopped, the lamp 5 lights off, and the play of music is stopped.

### 2) Music selection switch

When a music selection switch 52 is pushed a time, the IC picks out a piece of music from a lot of music at random. The music selection switch 52 is used when one wants to listen to a particular music. A particular music can be selected by pushing the music selection switch 52 one or several times. Play of the selected music is repeated after a blank of a second until the set time of a timer is up.

### 3) Timer selection switch

Operation time of the optical device 1 can be adjusted by operating a timer selection switch 53. The operation time which can be selected includes two types, i.e., 10 minutes or 20 minutes.

When the operation time is changed before the set time of the timer is up, the former set time is canceled and the newly set time is begun at the beginning.

### 4) Volume switch

Volume can be adjusted by operating a volume switch 54.

The optical device 1 is provided with the lamp 5, the reflector 13, and the concentric prism plate 14.

As the lamp 5, an incandescent lamp or the like is used, although it is not limited to this.

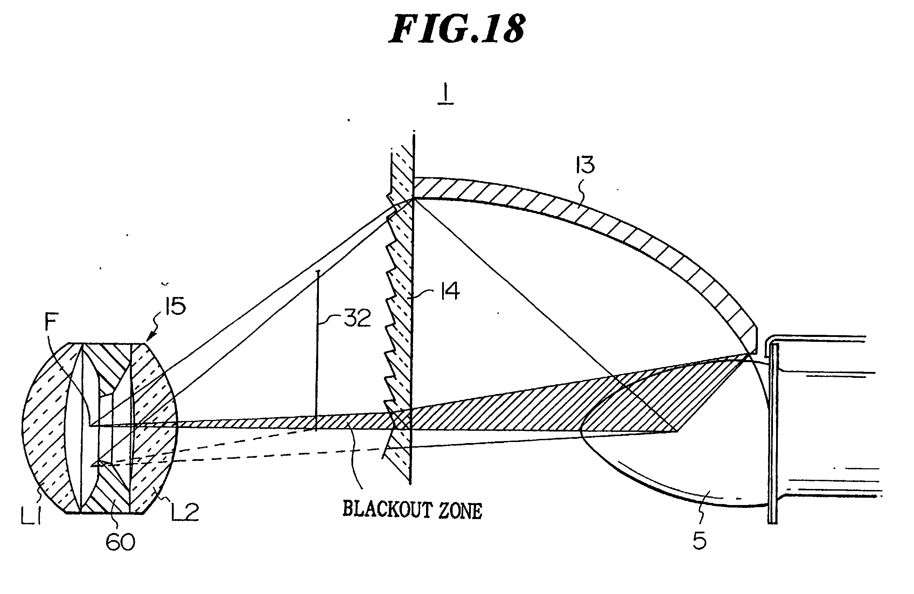

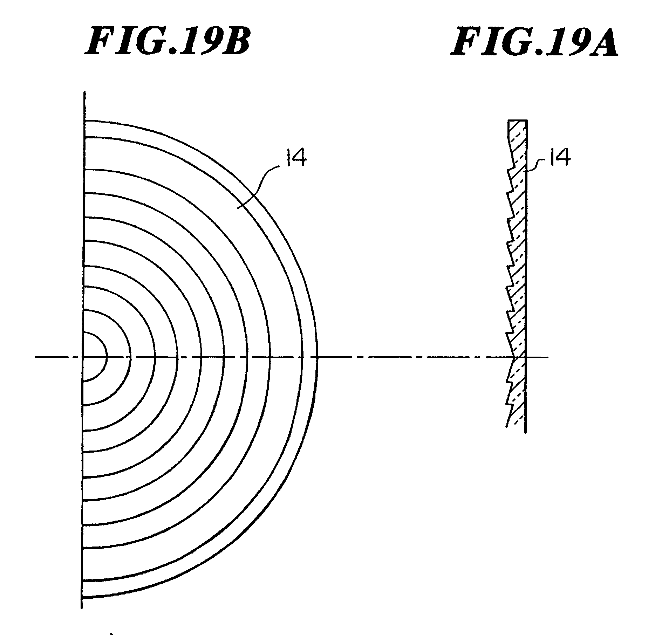

FIG. 18 shows the relationship between the illuminating means, the projection means and the blackout, and FIGS. 19A and 19B show the concentric prism plate in the optical device. The reflector 13 has approximately the shape of a half of an ellipsoid which is made a little narrower than a virtual ellipsoid which have two focal points at the installation point of the lamp 5 and the back principal point of the projection lens 15. If the reflector 13 were an ellipsoid reflector, that is, it had the same shape as a half of the virtual ellipsoid, the light which had been emitted from the lamp 5 and then reflected from the ellipsoid reflector would be collected to the back principal point F of the projection lens 15 in the event that no concentric prism plate 14 was provided. However, the reflector 63 in this embodiment has a reflecting surface which coincides with a set of points produced by rotating every point on the virtual ellipsoid through a predetermined angle around the installation point of the lamp 62 in a direction of the every point on the virtual ellipsoid moving a little inward. As a result, in the embodiment, the light which had been reflected from the reflector would be collected in a ring-shaped state near the back principal point in the event that no concentric prism plate 14 was provided.

The concentric prism plate 14 has a saw-toothed section taken along a radius, as shown in FIGS. 18, 19A, and 19B. Each of the ring shaped concentric prisms on the prism plate 14 has a shape which can collects the light to be collected in a ring-shaped state near the back principal point when no concentric prism plate 14, to the back principal point F of the projection lens 15.

For this purpose, the wedge angle of each ring shaped concentric prism is set so that the ring band-shaped beam of light passing therethrough is directed to the back principal point of the projection lens. That is, each of the ring shaped concentric prisms on the prism plate 14 in the embodiment has a particular prism angle to optimize the course of respective beam of light passing therethrough. The step angle of each ring shaped concentric prism is set so that the step is approximately parallel to the beam of light passing therethrough to minimize the ring-shaped shadow caused by the step.

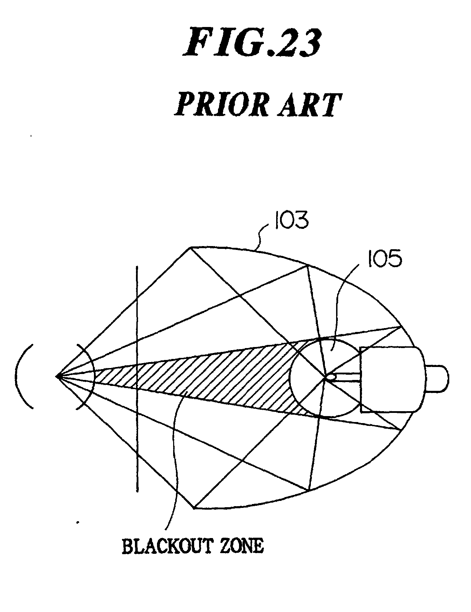

Combination of the concentric prism plate 14 and the projection lens 15 enables reduction of adverse effect of the shadow of the lamp 5, in comparison with the conventional one shown in FIG. 23. That is, although the shadow of the lamp 5 appears in the vicinity of the optical axis, the combination of the concentric prism plate 14 and the projection lens 15 makes the shadow of the lamp 5 smaller to reduce adverse effect of the shadow of the lamp 5. On the contrary, in the conventional illuminating means shown in FIG. 23 which has a half of ellipsoid-shaped reflector 113 and a lamp 105 which is arranged at the focal point of the ellipsoid and no concentric prism plate, the entirety of the large shadow (blackout) of the lamp 105 comes to be formed. Because formation of a plurality of concentric ring-shaped prisms on a plate enables uniformalization of the thickness of the prism means, it is possible to reduce the time for molding it to decrease the production cost therefor, and to suppress a sink mark caused by molding to improve the quality thereof. Further, it is possible to make the shadow (blackout) of the lamp 5 small by using such a prism plate even if a reflector which is small-sized relative to the size of the lamp is used. Thereby, it is possible to miniaturize the overall optical device and to produce it at a low cost.

A transparent positive film, i.e., a slide film, is used as the film with images 32, although it is not limited to this. it is of course possible also to use a film with printed images thereon as the film with images 32.

The projection lens 15 comprises two lenses L1 and L2 and an aperture stop member 60 provided between these lenses L1 and L2, as shown in FIGS. 18 and 20. The aperture stop member 60 comprises two stops IRIS1 and IRIS2 and has a large thickness. Adoption of such an aperture stop member 60 enables a large improvement of the astigmatism of the projection lens 15. Examples of specification of the lenses L1 and L2 and the aperture stop member 60 are shown in the following Example 1 and Example 2. In the Examples, the unit used for the dimensions therein is mm, and R1C, R2C, R3C and R4C denote the radii of curvatures of the surfaces R1, R2, R3 and R4, respectively.

### (Example 1)

**TABLE 1**

| | | EFL 14.27, | F No. 1.78 (Radius) | |
|---|---|---|---|---|
| | R | THICKNESS | MED | CLAMP |
| 1 | 10.2 (R1C) | 2.8 | PC | 6.3 |
| 2 | 23.0 (R2C) | 1.7 | AIR | 6.5 |
| 3 | 0 | 3 | IRIS1 | 3.5 |
| 4 | 0 | 1.3 | IRIS2 | 3 |
| 5 | R3C | 3.2 | PC | 6.5 |
| 6 | -10.2 (R4C) | 8.977 | AIR | 6.3 |

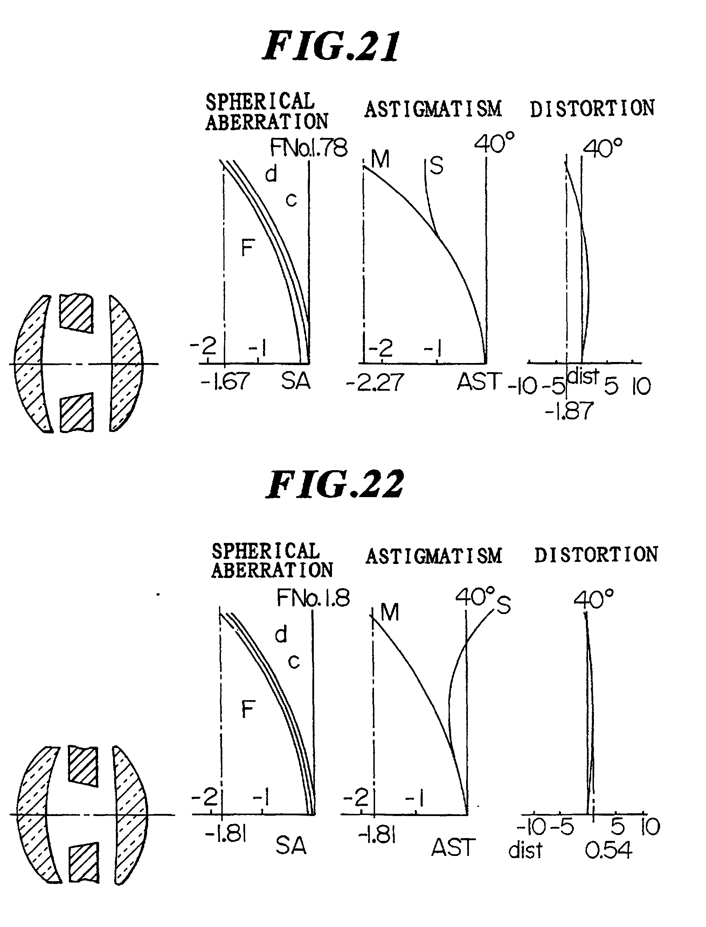

Example 1 shows the specification of the projection lens 15 which is shown in FIG. 20. FIG. 21 are views for showing aberrations, i.e., spherical aberration, astigmatism, and distortion. According to the projection lens, because -R1 = R4, and the R3 represents a plane, it is possible to make the production cost for a metal mold low. Further, it is possible to easily perform a simultaneous forming of the two lenses L1 and L2 by bringing the thicknesses (TH1, TH2) and volumes, of the lenses L1 and L2, near to each other.

### (Example 2)

**TABLE 2**

| | | EFL 14.23, | F No. 1.80 (Radius) | |
|---|---|---|---|---|
| | R | THICKNESS | MED | CLAMP |
| 1 | 8.0 | 2.9 | PC | 6.0 |
| 2 | 16.0 | 2 | AIR | 6.3 |
| 3 | 0 | 2.3 | IRIS1 | 3.2 |
| 4 | 0 | 1.0 | IRIS2 | 2.8 |
| 5 | -80.0 | 3.1 | PC | 6.3 |
| 6 | -10.2 | 8.333 | AIR | 6.0 |

FIG. 22 shows aberrations, i.e., spherical aberration, astigmatism, and distortion, for Example 2. According to the projection lens 15, because all of "R" are in the best condition, it is possible to make the astigmatism thereof smaller and to make the F-number larger, although the formability thereof is less improved.

Although the present invention has been explained according to the embodiments, it should also be understood that the present invention is not limited to the embodiments and that various changes and modifications may be made to the invention without departing from the gist thereof.

According to the optical device of the present invention, it is possible to realize a projection lens having a large aperture ratio, a wide angle of view and a distortion within a small range, at a low cost. Further, it is possible to provide an optical device suitable for projecting a very wide image on a huge screen such as a wall, a ceiling or the like even if a poor light source is used.

According to the optical device of the invention, in which a plurality of disc-shaped films with images can be rotated in desired directions or at desired rotational speeds independently of each other, it is possible to realize a projection device which can provide varied projected images. Further, it is possible to easily exchange the cassette for another one including other two disc-like films with different images, and thereby to give a pleasure of change of the projected images full of variety well.

## Claims

1. An optical device (1) including a projection lens (15) comprising first and second lenses (L1, L2) and a stop member (60),
said first lens (L1) being in the form of a meniscus lens having a positive power;
said second lens (L2) having a positive power; and
said stop member (60) being arranged between the first lens (L1) and the second lens (L2); the device (1) further including;
an illuminating means arranged behind the second lens (L2);
wherein
said illuminating means comprises a lamp (5) and a reflector (13), the reflector (13) having a reflecting surface which is approximately half of a virtual ellipsoid, the lamp (5) being arranged in the vicinity of one of the focal points of the virtual ellipsoid and the reflecting surface of the reflector being arranged on an inner side of the virtual ellipsoid so as to produce a ring shaped image of light emitted from the lamp (5) in the vicinity of a rear principle point (F) of said projection lens (15),
a prism plate (14) being provided having a plurality of ring-shaped prisms which are concentrically formed thereon, said prism plate (14) forming an image of the light from the reflector (13) at approximately the rear principal point (F) of the projection lens (15); and
an image member (29) being provided having an image arranged between the prism plate (14) and the projection lens (15),
the first lens (L1) being arranged so that a concave surface (R2) thereof faces a side of the stop (60) and the second lens (L2) being arranged so that a surface (R3) having a smaller curvature thereof faces the other side of the stop (60), and the first lens (L1) and the second lens (L2) having powers (L1P and L2P) and curvatures that satisfy the following conditions:
| | |
|---|---|
| Power ratio | 0.5<(L1P/L2P)<1.0 |
| Curvature of the first lens (L1) | 0.6>(R1C/R2C)>0.3 |
| Curvature of the second lens (L2) | \|R3C/R4C\|>3 |
wherein L1P and L2P are powers of the first lens (L1) and the second lens (L2), respectively, R2C is a radius of curvature of the concave surface R2 of the first lens (L1), R1C is a radius of curvature of the other surface R1 of the first lens (L1), R3C is a radius of curvature of the surface (R3) of the second lens (L2), and R4C is a radius of curvature of the other surface (R4) of the second lens (L2).

2. An optical device as claimed in claim 1, wherein the lenses (L1 and L2) are made of a homogeneous plastic.

3. An optical device as claimed in claim 1 or 2, wherein the stop member (60) comprises two stops (IRIS1, IRIS2) which are spaced apart from each other.

4. An optical device as claimed in claim 1, 2 or 3, wherein the image member (29) comprises a plurality of disc-shaped films with images, which are rotatably provided on an axis (30), and a cassette frame (29a and 29b) for containing the disc-shaped films (32a and 32b) therein and having a window for projecting images of the films therethrough.

5. An optical device as claimed in claim 4, further comprising an upper roller (25a) for giving a rotation to an upper one of the films in the cassette frame (29a and 29b), a lower roller (25b) for giving a rotation to a lower one of the films, and a sliding member (40) for engaging the upper and lower rollers (25a and 25b) with the films (32a and 32b) or releasing an engagement thereof.

6. An optical device as claimed in claim 5, wherein the upper and lower rollers (25a and 25b) are driven independently of each other.

7. An optical device as claimed in claim 5 or 6, wherein the sliding member (40) has upper and lower bevels to make the top narrower, for keeping the upper and lower rollers (25a and 25b) apart from each other while the sliding member (40) engages with axes (27a and 27b) of the upper and lower rollers, to release the engagement between the rollers (25a and 25b) and the films (32a and 32b).

8. An optical device as claimed in claim 7, further comprising a swingable lever (44) engaging with the sliding member (40), for sliding the sliding member (40) by an engagement with the cassette frame (29), so that the sliding member (40) engages with axes (27a and 27b) of the upper and lower rollers (25a and 25b) to release the engagement between the rollers (25a and 25b) and the films (32a and 32b) before the cassette frame (29) reaches a predetermined position between the prism plate (14) and the projection lens (15), and an engagement of the sliding member (40) with the axes (27a and 27b) of the rollers (25a and 25b) is released when the cassette frame (29) reaches the predetermined position.

9. An optical device as claimed in any one of the claims 1 to 8, wherein each ring-shaped prism of the prism plate (14) has a particular prism angle to optimize a course of a beam of light passing therethrough, and a step angle of each ring-shaped prism is set so that the step is approximately parallel to the beam of light passing therethrough to minimize the ring-shaped shadow caused by the step.

## Patentansprüche

1. Optisches Gerät (1) mit einer Projektionslinse (15), umfassend eine erste und zweite Linse (L1,L2) sowie eine Blendenvorrichtung (60), wobei
- die erste Linse (L1) die Form einer Meniskuslinse mit einer positiven Brechkraft hat,
- die zweite Linse (L2) eine positive Brechkraft hat, und
- die Blendenvorrichtung (60) zwischen der ersten Linse (L1) und der zweiten Linse (L2) angeordnet ist; wobei das Gerät (1) des Weiteren umfasst:
- eine hinter der zweiten Linse (L2) angeordnete Beleuchtungseinrichtung,
wobei
- die Beleuchtungseinrichtung eine Lampe (5) und einen Reflektor (13) aufweist, wobei der Reflektor (13) eine reflektierende Oberfläche hat, welche ungefähr einem halben gedachten Ellipsoid entspricht, die Lampe (5) in der Nähe einer der Brennpunkte des gedachten Ellipsoids angebracht ist, und die reflektierende Oberfläche des Reflektors so auf der Innenseite des gedachten Ellipsoids angebracht ist, dass ein ringförmiges Bild des von der Lampe (5) abgestrahlten Lichts in der Nähe eines hinteren Hauptpunktes (F) der Projektionslinse (15) erzeugt wird,
- eine Prismenplatte (14) mit mehreren ringförmigen Prismen vorgesehen ist, die konzentrisch darauf ausgebildet sind, wobei die Prismenplatte (14) ein Bild des Lichts vom Reflektor (13) ungefähr am hinteren Hauptpunkt (F) der Projektionslinse (15) erzeugt, und
- eine Bildeinheit (29) mit einem Bild vorgesehen ist, das sich zwischen der Prismenplatte (14) und der Projektionslinse (15) befindet,
- die erste Linse (L1) so angeordnet ist, dass deren konkave Oberfläche (R2) einer Seite der Blendenvorrichtung (60) zugewandt ist, und die zweite Linse (L2) so angeordnet ist, dass deren Oberfläche (R3), die eine kleinere Krümmung aufweist, der anderen Seite der Blendenvorrichtung (60) zugewandt ist, und wobei die erste Linse (L1) und die zweite Linse (L2) Brechkräfte (L1P und L2P) und Krümmungen haben, die den folgenden Bedingungen genügen:
| | |
|---|---|
| Brechkraftverhältnis | 0,5 <(L1P/L2P) < 1,0 |
| Krümmung der ersten Linse (L1) | 0,6 > (R1C/R2C) > 0,3 |
| Krümmung der zweiten Linse (L2) | \|R3C/R4C\| > 3 |
wobei L1P und L2P die Brechkräfte der ersten Linse (L1) bzw. der zweiten Linse (L2) sind, R2C ein Krümmungsradius der konkaven Oberfläche (R2) der ersten Linse (L1) ist, R1C ein Krümmungsradius der anderen Oberfläche (R1) der ersten Linse (L1) ist, R3C ein Krümmungsradius der Oberfläche (R3) der zweiten Linse (L2) ist, und R4C ein Krümmungsradius der anderen Oberfläche (R4) der zweiten Linse (L2) ist.

2. Optisches Gerät nach Anspruch 1, wobei die Linsen (L1 und L2) aus homogenem Kunststoff bestehen.

3. Optisches Gerät nach Anspruch 1 oder 2, wobei die Blendenvorrichtung (60) aus zwei Blenden (IRIS1 und IRIS2) besteht, die voneinander beabstandet sind.

4. Optisches Gerät nach Anspruch 1, 2 oder 3, wobei die Bildeinheit (29) mehrere scheibenförmige Filme mit Bildern aufweist, welche drehbar an einer Achse (30) angeordnet sind, sowie einen Kassettenrahmen (29a und 29b), um die scheibenförmigen Filme (32a und 32b) darin aufzunehmen, und mit einem Fenster, durch das die Bilder der Filme projiziert werden.

5. Optisches Gerät nach Anspruch 4, des Weiteren umfassend eine obere Rolle (25a), um den oberen der Filme im Kassettengehäuse (29a und 29b) in Drehung zu versetzen, eine untere Rolle (25b), um den unteren der Filme in Drehung zu versetzen, und ein Schiebeteil (40), um die obere und untere Rolle (25a und 25b) mit den Filmen (32a und 32b) in oder außer Eingriff zu bringen.

6. Optisches Gerät nach Anspruch 5, wobei die obere und untere Rolle (25a und 25b) unabhängig voneinander angetrieben werden.

7. Optisches Gerät nach Anspruch 5 oder 6, wobei das Schiebeteil (40) obere und untere Abschrägungen aufweist, um es an der Oberseite zu verjüngen, so dass die obere und untere Rolle (25a und 25b) entfernt voneinander gehalten werden, während das Schiebeteil (40) mit den Achsen (27a und 27b) der oberen und unteren Rolle in Eingriff ist, um den Eingriff zwischen den Rollen (25a und 25b) und den Filmen (32a und 32b) aufzuheben.

8. Optisches Gerät nach Anspruch 7, des Weiteren umfassend einen schwenkbaren Hebel (44) im Eingriff mit dem Schiebeteil (40), um das Schiebeteil (40) durch Eingriff mit dem Kassettenrahmen (29) so zu verschieben, dass das Schiebeteil (40) mit den Achsen (27a und 27b) der oberen und unteren Rolle (25a und 25b) in Eingriff kommt, um den Eingriff zwischen den Rollen (25a und 25b) und den Filmen (32a und 32b) aufzuheben, bevor der Kassettenrahmen (29) eine vorbestimmte Position zwischen der Prismenplatte (14) und der Projektionslinse (15) erreicht, und dass ein Eingriff des Schiebeteils (40) mit den Achsen (27a und 27b) der Rollen (25a und 25b) aufgehoben wird, wenn der Kassettenrahmen (29) die vorbestimmte Position erreicht.

9. Optisches Gerät nach einem der Ansprüche 1 bis 8, wobei jedes ringförmige Prisma der Prismenplatte (14) einen speziellen Prismenwinkel hat, um den Verlauf des dort durchgehenden Lichtstrahls zu optimieren und für jedes ringförmige Prisma ein Stufenwinkel so eingestellt ist, dass die Stufe ungefähr parallel zu dem dort durchgehenden Lichtstrahl ist, um den ringförmigen, durch die Stufe verursachte Schatten zu minimieren.

## Revendications

1. Appareil optique (1) comprenant un objectif de projection (15) comprenant une première et une deuxième lentilles (L1, L2) ainsi qu'un élément de butée (60),
ladite première lentille (L1) se présentant sous la forme d'une lentille ménisque ayant une puissance positive ;
ladite deuxième lentille (L2) ayant une puissance positive ; et
ledit élément de butée (60) étant disposé entre la première lentille (L1) et la deuxième lentille (L2) ; l'appareil (1) comprenant en outre :
des moyens d'éclairage placés derrière la deuxième lentille (L2) ;
dans lequel lesdits moyens d'éclairage comprennent une lampe (5) et un réflecteur (13), le réflecteur (13) ayant une surface réflectrice qui correspond à la moitié environ d'un ellipsoïde virtuel, la lampe (5) étant placée à proximité de l'un des foyers de l'ellipsoïde virtuel et la surface réflectrice du réflecteur étant placée sur un côté intérieur de l'ellipsoïde virtuel de manière à produire une image de forme annulaire de la lumière émise à partir de la lampe (5) à proximité d'un point principal arrière (F) de ladite lentille de projection (15) ;
une plaque prismatique (14) étant fournie, ayant une pluralité de prismes de forme annulaire qui sont formés concentriquement sur celle-ci, ladite plaque prismatique (14) formant une image de la lumière émise à partir du réflecteur (13) approximativement au niveau du point principal arrière (F) de l'objectif de projection (15) ; et
un élément de formation d'image (29) étant fourni, ayant une image placée entre la plaque prismatique (14) et l'objectif de projection (15) ;
la première lentille (L1) étant disposée de telle sorte qu'une surface concave (R2) de celle-ci soit dirigée vers un côté de l'élément de butée (60) et la deuxième lentille (L2) étant disposée de telle sorte qu'une surface (R3) ayant une courbure plus petite que celle-ci soit dirigée vers l'autre côté de l'élément de butée (60), et la première lentille (L1) et la deuxième lentille (L2) ayant des puissances (L1P et L2P) et des courbures qui satisfont les conditions suivantes :
| | |
|---|---|
| Rapport de puissance | 0,5<(L1P/L2P)<1,0 |
| Courbure de la 1ère lentille (L1) | 0,6>(R1C/R2C)>0,3 |
| Courbure de la 2ème lentille (L2) | •R3C/R4C•>3 |
dans lesquels L1P et L2P sont les puissances de la première lentille (L1) et de la deuxième lentille (L2), respectivement, R2C est un rayon de courbure de la surface concave R2 de la première lentille (L1), R1C est un rayon de courbure de l'autre surface R1 de la première lentille (L1), R3C est un rayon de courbure de la surface (R3) de la deuxième lentille (L2), et R4C est un rayon de courbure de l'autre surface (R4) de la deuxième lentille (L2).

2. Appareil optique selon la revendication 1, dans lequel les lentilles (L1 et L2) sont réalisées dans un plastique homogène.

3. Appareil optique selon la revendication 1 ou 2, dans lequel l'élément de butée (60) comprend deux butées (IRIS1, IRIS2) qui sont espacées l'une par rapport à l'autre.

4. Appareil optique selon la revendication 1, 2 ou 3, dans lequel l'élément de formation d'image (29) comprend une pluralité de films en forme de disque comportant des images, qui sont montés de façon rotative sur un axe (30), et une armature de cassette (29a et 29b) adaptée pour contenir les films en forme de disque (32a et 32b) dans celle-ci et comportant une fenêtre qui permet de projeter les images des films à travers celle-ci.

5. Appareil optique selon la revendication 4, comprenant en outre un rouleau supérieur (25a) adapté pour permettre une rotation du film situé le plus en haut dans l'armature de cassette (29a et 29b), un rouleau inférieur (25b) adapté pour permettre une rotation du film situé le plus en bas, et un organe coulissant (40) adapté pour permettre aux rouleaux supérieur et inférieur (25a et 25b) de se mettre en prise avec les films (32a et 32b) ou de se libérer d'une prise avec ceux-ci.

6. Appareil optique selon la revendication 5, dans lequel les rouleaux supérieur et inférieur (25a et 25b) sont entraînés indépendamment l'un de l'autre.

7. Appareil optique selon la revendication 5 ou 6, dans lequel l'organe coulissant (40) comprend des parties biseautées supérieure et inférieure afin de rendre le haut de l'organe plus étroit, de manière à maintenir les rouleaux supérieur et inférieur (25a et 25b) écartés l'un par rapport à l'autre tandis que l'organe coulissant (40) se met en prise avec les axes (27a et 27b) des rouleaux supérieur et inférieur afin de libérer la prise entre les rouleaux (25a et 25b) et les films (32a et 32b).

8. Appareil optique selon la revendication 7, comprenant en outre un levier susceptible de pivoter (44) qui se met en prise avec l'organe coulissant (40) afin de faire coulisser l'organe coulissant (40) par sa mise en prise avec l'armature de cassette (29), de telle sorte que l'organe coulissant (40) soit en prise avec les axes (27a et 27b) des rouleaux supérieur et inférieur (25a et 25b) afin de libérer la prise entre les rouleaux (25a et 25b) et les films (32a et 32b) avant que l'armature de cassette (29) n'atteigne une position prédéterminée entre la plaque prismatique (14) et l'objectif de projection (15), et qu'une prise entre l'organe coulissant (40) et les axes (27a et 27b) des rouleaux (25a et 25b) soit libérée lorsque l'armature de cassette (29) atteint la position prédéterminée.

9. Appareil optique selon l'une quelconque des revendications 1 à 8, dans lequel chacun des prismes de forme annulaire de la plaque prismatique (14) a un angle de prisme particulier qui permet d'optimiser une course d'un faisceau de lumière passant à travers celle-ci, et dans lequel un angle de palier de chacun des prismes de forme annulaire est calculé de telle sorte que le palier soit à peu près parallèle au faisceau de lumière passant à travers celle-ci afin de minimiser l'ombre de forme annulaire provoquée par le palier.
